# EUROPEAN PATENT APPLICATION

(11) **EP 3 623 449 A1**
(43) Date of publication of application: **18.03.2020**
(21) Application number: 18194535.3
(22) Date of filing: 14.09.2018
(51) Int. Cl.: C09K 11/77, H05B 33/14, H05B 33/18

(54) **METHOD FOR PREPARING A LUMINESCENT COMPOSITION**

(71) Applicant: Seaborough IP I B.V., 1019 AG Amsterdam (NL)
(72) Inventor: Krames, Michael, Mountain View, California 94041 CA (US); van de Haar, Marie Anne, 1381HL Weesp (NL)
(74) Representative: Hoyng Rokh Monegier LLP

(57) **Abstract**

The invention relates to a method for preparing a luminescent composition, said method comprising:
(i) providing a first luminescent material and a second luminescent material;
(ii) dispersing said first luminescent material and said second luminescent material in a liquid;
(iii) optionally, removing organic ligands from said first luminescent material and/or from said second luminescent material;
(iv) removing said liquid, resulting in a dried product, wherein said removing comprises evaporation; and
(v) annealing said dried product.

## Description

### FIELD OF THE INVENTION

The invention relates to methods for preparing a luminescent composition. The invention further relates to a method for treating a luminescent material comprising organic ligands. The invention also relates to a luminescent composition and a luminescent material obtainable by the method according to the invention.

In unpublished PCT application no. PCT/EP2018/056660, the present inventors have described, amongst others, compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

The skilled person will understand that non-radiative energy transfer (sometimes also referred to as Fluorescent Resonance Energy Tranfer, FRET) from the sensitizer material to the light emitting material involves the non-radiative transfer of energy from an excited sensitizer ion in the sensitizer material to an acceptor (or emitter) ion in the light emitting material. It is evidenced by increased selective excitation of the sensitizer ion in the sensitizer material, resulting in increased emission from an emitter ion in the light emitting material.

The present application discloses further improved luminescent compositions and luminescent materials and further improved methods from the preparation thereof.

### SUMMARY OF THE INVENTION

According to a first aspect of the invention, there is provided a method for preparing a luminescent composition, said method comprising:
(i) providing a first luminescent material and a second luminescent material;
(ii) dispersing said first luminescent material and said second luminescent material in a liquid;
(iii) optionally, removing organic ligands from said first luminescent material and/or from said second luminescent material;
(iv) removing said liquid, resulting in a dried product, wherein said removing comprises evaporation; and
(v) annealing said dried product.

According to a second aspect of the invention there is provided a method for preparing a luminescent composition, said method comprising:
- providing a composition comprising a first luminescent material and a second luminescent material, wherein said first luminescent material and said second luminescent material are selected such that said second luminescent material has an emission spectrum which overlaps at least partly with one or more of the excitation bands of said first luminescent material; and wherein said first luminescent material and said second luminescent material are so arranged to each other to allow non-radiative energy transfer from said second luminescent material to said first luminescent material; and
- annealing said composition.

According to a third aspect of the invention there is provided a method for treating a luminescent material comprising organic ligands, said method comprising:
(a) removing at least part of said organic ligands from said luminescent material; and
(b) after (a), annealing said luminescent material.

It has been found that annealing according to the invention enables to obtain a composition capable of providing increased emission intensities compared to a composition obtained by a process which does not involve annealing. Furthermore, annealing according to the invention enables to obtain a composition capable of providing increased non-radiative energy transfer compared to a composition obtained by a process which does not involve annealing.

Furthermore, it has been found that removing at least part of the organic ligands from a luminescent material comprising organic ligands enables efficient annealing without or with limited oxidation of organic ligands. This is in particular advantageous if the luminescent material is in the form of nanoparticles, as it is common to bind organic ligands (also referred to as capping molecules) to the surface of nanoparticles to prevent clustering during or after synthesis.

### BRIEF DESCRIPTION OF THE DRAWINGS

FIGURE 1 provides Eu³⁺ emission spectra of LaPO₄:Eu³⁺ (5%)/LaPO₄:Tb³⁺ (40%) mixtures, mixed in a 1:1 weight ratio, before and after annealing at 600 °C. Excitation in the Tb³⁺, at 484.5 nm.
FIGURE 2 provides Eu³⁺ excitation spectra of LaPO₄:Eu³⁺ (5%)/LaPO₄:Tb³⁺ (40%) mixtures, mixed in a 1:1 weight ratio, before and after annealing at 600 °C. Emission measured at 697 nm. Spectra are normalized to the 395 nm direct Eu³⁺ excitation line.
FIGURE 3 shows a first embodiment of a composition which may be used in the method according to the second aspect of the invention.
FIGURE 4 shows a second embodiment of a composition which may be used in the method according to the second aspect of the invention.
FIGURE 5 shows a very schematical cross-sectional view through a nanoparticle which may be used in the method according to the second aspect of the invention.
FIGURE 7 shows a very schematical cross-sectional view through a nanoparticle which may be used in the method according to the second aspect of the invention.
FIGURE 8 shows a very schematical cross-sectional view through a nanoparticle which may be used in the method according to the second aspect of the invention.

### DETAILED DESCRIPTION OF THE INVENTION

### First luminescent material and second luminescent material

The method according to the first aspect of the invention comprises providing a first luminescent material and a second luminescent material. The method according to the second aspect of the invention comprises providing a composition comprising a first luminescent material and a second luminescent material.

Preferred characteristics and features of the first luminescent material and second luminescent material are described below.

In a preferred embodiment, the first luminescent material and the second luminescent material are selected such that the second luminescent material has an emission spectrum which overlaps at least partly with one or more of excitation bands of the first luminescent material. The skilled person will understand that, in this preferred embodiment, the first luminescent material can function as light emitting material and the second luminescent material can function as sensitizer material. In the context of this preferred embodiment the terms first luminescent material and light emitting material will be used interchangeably. Likewise, in this context of this preferred embodiment and as used herein, the terms second luminescent material and sensitizer material will be used interchangeably.

Preferably, the first luminescent material is a red emitting material. As used herein the term red emitting material refers to a material which, upon suitable excitation, has one or more emission bands between 600 nm and 700 nm. According to alternative embodiments, the first luminescent material is a material having, upon suitable excitation, one or more emission bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

Preferably, the first luminescent material is doped with one or more ions selected from the group consisting of Eu³⁺, Tb³⁺, Mn⁴⁺. Especially preferred is Eu³⁺ or Tb³⁺.

Preferably, the second luminescent material is excitable in the wavelength range between 380 to 580 nm. The second luminescent material may for instance be excitable in the UV-A (315 to 400 nm), violet (400 to 440 nm), blue (440 to 480 nm) or green (510 to 560 nm) wavelength range, preferably in the blue (440 to 480 nm) wavelength range. Preferably, the second luminescent material is doped with one or more ions selected from of the group consisting of Eu²⁺, Pb²⁺, Bi³⁺ and Ce³⁺, more preferably Eu²⁺ or Ce³⁺, most preferably Ce³⁺.

The first luminescent material and second luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active lanthanide ions can be incorporated.

Preferably, the host lattice of the first luminescent material is an oxide, phosphate, vanadate or a combination thereof, more preferably selected from the group consisting of Y₂O₃, YVPO₄, YVO₄ or LaPO₄ or a combination thereof. Preferably, said preferred host lattice of the first luminescent material is doped with one or more ions selected from the group consisting of Eu³⁺ and Tb³⁺.

In case of Eu³⁺ doping, the first luminescent material may for example have a host lattice doped at a doping level of 2-30% Eu³⁺, more preferably 5-15% Eu³⁺. In case Tb³⁺ doping, the first luminescent material may for example have a host lattice doped at a doping level of 5-100% Tb³⁺, more preferably 20-50% Eu³⁺.

In an exemplary embodiment, the first luminescent material is selected from the group consisting of (Ca,Sr)Ga2O6:Eu3+ (or Tb3+), (Ca,Sr,Ba)La2Bi2(SiO4)3O:Eu3+ (or Tb3+), (Ca,Sr,Ba)SnO3:Eu3+ (or Tb3+), (Ca,Y,Gd)MoO4:Eu3+ (or Tb3+), (Y,Gd)BO3 (pseudo-vaterite):Eu3+ (or Tb3+), (Y,Tb)SiO5:Eu3+ (or Tb3+), A-La2O3:Eu3+ (or Tb3+), Ba2(SiO4):O2-:Eu3+ (or Tb3+), Ba2MgSi2O7:Eu3+ (or Tb3+), Ba2Y(BO3)2Cl:Eu3+ (or Tb3+), Ba3(PO4)2:Eu3+ (or Tb3+), Ba3Ca3(PO4)4:Eu3+ (or Tb3+), Ba3Gd(BO3)3:Eu3+ (or Tb3+), Ba3Gd2(BO3)4:Eu3+ (or Tb3+), Ba3La2(BO3)4:Eu3+ (or Tb3+), Ba3V2O8:Eu3+ (or Tb3+), Ba3Y2(BO3)4:Eu3+ (or Tb3+), BaB8O13:Eu3+ (or Tb3+), BaBPO5:Eu3+ (or Tb3+), BaFCl:Eu3+ (or Tb3+), BaGd2 O4:Eu3+ (or Tb3+), BaGd4 Si5O17:Sm:Eu3+ (or Tb3+), BaGdB9O16:Eu3+ (or Tb3+), BaLaB9O16:Eu3+ (or Tb3+), BaSO4:Eu3+ (or Tb3+), BaY2F8:Yb:Eu3+ (or Tb3+), BaY2Si3O10:Eu3+ (or Tb3+), BaYB9O16:Eu3+ (or Tb3+), BaZr(BO3)2:Eu3+ (or Tb3+), BaZrO3:Eu3+ (or Tb3+), BaZrO3:Eu3+ (or Tb3+), b-BaB2O4:Eu3+ (or Tb3+), B-Gd2O3:Eu3+ (or Tb3+), Ca2Al(AlSiO7):Eu3+ (or Tb3+), Ca2Gd2(GeO4)2O:Eu3+ (or Tb3+), Ca2Gd8(SiO4)6O2:Eu3+ (or Tb3+), Ca2Gd8Si6O26:Eu3+ (or Tb3+), Ca2La8(SiO4)6O2:Eu3+ (or Tb3+), Ca3(BO3)2:Eu3+ (or Tb3+), Ca3Al2O6:Eu3+ (or Tb3+), Ca3Gd2(BO3)4:Eu3+ (or Tb3+), Ca3La2(BO3)4:Eu3+ (or Tb3+), Ca3Y2(BO3)4:Eu3+ (or Tb3+), Ca4GdO(BO3)3:Eu3+ (or Tb3+), Ca5(PO11)3F:Eu3+ (or Tb3+), Ca5(PO4)3Br:Eu3+ (or Tb3+), Ca5(PO4)3F:(4f-site):Eu3+ (or Tb3+), Ca5(PO4)3F:(6h-site):Eu3+ (or Tb3+), Ca5(PO4)3OH:Eu3+ (or Tb3+), CaBPO5:Eu3+ (or Tb3+), CaF2:Eu3+ (or Tb3+), CaLaB7O13:Eu3+ (or Tb3+), calcite-CaCO3:Eu3+ (or Tb3+), CaO:Eu3+ (or Tb3+), CaSO4:Eu3+ (or Tb3+), CaYO(BO3):Eu3+ (or Tb3+), C-Gd2O3:Eu3+ (or Tb3+), C-Lu2O3:(C2):Eu3+ (or Tb3+), C-Lu2O3:(C3*i*):Eu3+ (or Tb3+), Cs2NaYF6:Tm:Eu3+ (or Tb3+), C-Sc2O3:Yb:Eu3+ (or Tb3+), C-Y2O3:Eu3+ (or Tb3+), Eu3+ (or Tb3+)[(ttfa)3(phen)]0:Eu3+ (or Tb3+), Gd17.33(BO3)4(B2O5)2O16:Eu3+ (or Tb3+), Gd2BaZnO5:Eu3+ (or Tb3+), Gd2O2(SO4):Eu3+ (or Tb3+), Gd2P4O13:Eu3+ (or Tb3+), Gd3O4Br:Eu3+ (or Tb3+), Gd3PO7:Eu3+ (or Tb3+), Gd3Te2Li3O12:Eu3+ (or Tb3+), Gd8P2O17:Eu3+ (or Tb3+), GdAl3 (BO3)4:Eu3+ (or Tb3+), GdAlO3:Eu3+ (or Tb3+), GdAlO3:Eu3+ (or Tb3+), GdB3O6:Eu3+ (or Tb3+), GdBO3:Eu3+ (or Tb3+), GdGaO3:Eu3+ (or Tb3+), GdOBr:Eu3+ (or Tb3+), GdOCl:Eu3+ (or Tb3+), GdP3O9:Eu3+ (or Tb3+), GdPO4:Eu3+ (or Tb3+), I-CaB2O4:Eu3+ (or Tb3+), InBO3:Eu3+ (or Tb3+), I-SrB2O4:Eu3+ (or Tb3+), KCaGd(PO4)2:Eu3+ (or Tb3+), La26O27(BO3)8:Eu3+ (or Tb3+), La2BaZnO5:Eu3+ (or Tb3+), La2Hf2O7:Eu3+ (or Tb3+), La2O2(SO4):Eu3+ (or Tb3+), La2O2S:Eu3+ (or Tb3+), La2O2S:Eu3+ (or Tb3+), La2W3O12:Eu3+ (or Tb3+), La2Zr3(MoO4)9:Eu3+ (or Tb3+), La3TaO4Cl6:Eu3+ (or Tb3+), La3TaO4Cl6:Eu3+ (or Tb3+), La3WO6Cl3:Eu3+ (or Tb3+), La3WO6Cl3:Eu3+ (or Tb3+), LaAlO3:Eu3+ (or Tb3+), LaAlO3:Eu3+ (or Tb3+), LaB3O6:Eu3+ (or Tb3+), LaBO3:Eu3+ (or Tb3+), LaF3:Eu3+ (or Tb3+), LaF3:Eu3+ (or Tb3+), LaGaO3:Eu3+ (or Tb3+), LaMgB5O10:Eu3+ (or Tb3+), LaOBr:Eu3+ (or Tb3+), LaOCl:Eu3+ (or Tb3+), LaOF:Eu3+ (or Tb3+), LaOI:Eu3+ (or Tb3+), LaP3O9:Eu3+ (or Tb3+), LaPO₄:Eu³⁺ (or Tb3+), LaYO3:Eu3+ (or Tb3+), Li2Lu5O4(BO3)3:Eu3+ (or Tb3+), Li3Ba2La3(MoO4)8:Eu3+ (or Tb3+), Li3La2(BO3)3:Eu3+ (or Tb3+), Li6Gd(BO3)3:Eu3+ (or Tb3+), Li6Y(BO3)3:Eu3+ (or Tb3+), LiCaAlF6:Eu3+ (or Tb3+), LiEu3+ (or Tb3+)Mo2O8:Eu3+ (or Tb3+), LiGd6O5(BO3)3:Eu3+ (or Tb3+), LiGdF4:Eu3+ (or Tb3+), LiGdGeO4:Eu3+ (or Tb3+), LiGdO2:Eu3+ (or Tb3+), LiGdSiO4:Eu3+ (or Tb3+), LiLa2O2BO3:Eu3+ (or Tb3+), LiLaGeO4:Eu3+ (or Tb3+), LiLaO2:Eu3+ (or Tb3+), LiLaP4O12:Eu3+ (or Tb3+), LiLaSiO4:Eu3+ (or Tb3+), LiLuGeO4:Eu3+ (or Tb3+), LiLuO2:Eu3+ (or Tb3+), LiLuSiO4:Eu3+ (or Tb3+), LiScO2:Eu3+ (or Tb3+), LiSr2YO4:Eu3+ (or Tb3+), LiSrAlF6:Eu3+ (or Tb3+), LiSrAlF6:Eu3+ (or Tb3+), LiY6O5(BO3)3:Eu3+ (or Tb3+), LiYF4:Eu3+ (or Tb3+), LiYGeO4:Eu3+ (or Tb3+), LiYO2:Eu3+ (or Tb3+), LiYSiO4:Eu3+ (or Tb3+), Lu2O2(SO4):Eu3+ (or Tb3+), Lu2Si2O7:Eu3+ (or Tb3+)3+ (or Tb3+), Lu3Al5O12:Eu3+ (or Tb3+), Lu3Al5O12:Yb:Eu3+ (or Tb3+), LuBO3:Eu3+ (or Tb3+), LuBO3 (calcite):Eu3+ (or Tb3+), LuOCl:Eu3+ (or Tb3+), LuPO4:Eu3+ (or Tb3+), Mg2Gd8(SiO4)6O2:Eu3+ (or Tb3+), Mg2La8(SiO4)6O2:Eu3+ (or Tb3+), MgO:Eu3+ (or Tb3+), MgSiO3:Eu3+ (or Tb3+), Na3YSi3O9:Eu3+ (or Tb3+), Na6Gd(BO3)3:Eu3+ (or Tb3+), NaGdGeO4:Eu3+ (or Tb3+), NaGdO2:Eu3+ (or Tb3+), NaGdSiO4:Eu3+ (or Tb3+), NaGdSiO4:Eu3+ (or Tb3+), NaLaGeO4:Eu3+ (or Tb3+), NaLaO2:Eu3+ (or Tb3+), NaLaSiO4:Eu3+ (or Tb3+), NaLuGeO4:Eu3+ (or Tb3+), NaLuSiO4:Eu3+ (or Tb3+), NaScO2:Eu3+ (or Tb3+), NaSrLa(VO4)2:Eu3+ (or Tb3+), NaYGeO4:Eu3+ (or Tb3+), NaYSiO4:Eu3+ (or Tb3+), ScBO3:Eu3+ (or Tb3+), ScOCl:Eu3+ (or Tb3+), ScPO4:Eu3+ (or Tb3+), Sr2B2O5:Eu3+ (or Tb3+), Sr2Gd8(SiO4)6O2:Eu3+ (or Tb3+), Sr2La2Zn2O7:Eu3+ (or Tb3+), Sr2La2Zn2O7:Eu3+ (or Tb3+), Sr2LaAlO5:Eu3+ (or Tb3+), Sr3(BO3)2:Eu3+ (or Tb3+), Sr3(PO4)2:Eu3+ (or Tb3+), Sr3(PO4)2:Sm:Eu3+ (or Tb3+), Sr3Gd2(BO3)4:Eu3+ (or Tb3+), Sr3La2(BO3)4:Eu3+ (or Tb3+), Sr3La6(SiO4)6:Eu3+ (or Tb3+), Sr3Y2(BO3)4:Eu3+ (or Tb3+), Sr5(PO4)3F:Eu3+ (or Tb3+), Sr9Ln(VO4)7:Eu3+ (or Tb3+), SrA12 B2O7:Eu3+ (or Tb3+), SrB4O7:Eu3+ (or Tb3+), SrB6O10:Eu3+ (or Tb3+), SrCO3:Eu3+ (or Tb3+), SrGdAlO4:Eu3+ (or Tb3+), SrHfO3:Tm:Eu3+ (or Tb3+), SrLa2BeO5:(4c):Eu3+ (or Tb3+), SrLa2BeO5:(8d):Eu3+ (or Tb3+), SrLaAlO4:Eu3+ (or Tb3+), SrLaGa3O7:Eu3+ (or Tb3+), SrLaO(BO3):Eu3+ (or Tb3+), SrO:Eu3+ (or Tb3+), SrY2O4:(Sr-site):Eu3+ (or Tb3+), SrY2O4:(Y-site1):Eu3+ (or Tb3+), SrY2O4:(Y-site2):Eu3+ (or Tb3+), Tb2Mo3O12:Eu3+ (or Tb3+), Tb2W3O12:Eu3+ (or Tb3+), TbBO3:Eu3+ (or Tb3+), ThO2:Eu3+ (or Tb3+), X1-Gd2SiO5:Eu3+ (or Tb3+), X1-Y2SiO5:Eu3+ (or Tb3+), X2-Y2SiO5:Eu3+ (or Tb3+), Y17.33(BO3)4(B2O5)2O16:Eu3+ (or Tb3+), Y2Ge2O7:Eu3+ (or Tb3+), Y2GeO5:Eu3+ (or Tb3+), Y2O2(SO4):Eu3+ (or Tb3+), Y2O2S:Eu3+ (or Tb3+), Y2O2S:Eu3+ (or Tb3+), Y2O3:Eu3+ (or Tb3+), Y2P4O13:Eu3+ (or Tb3+), Y2Si2O7:Eu3+ (or Tb3+), Y2SiO5:Eu3+ (or Tb3+), Y3Al5O12:Eu3+ (or Tb3+), Y3Ga5O12:Eu3+ (or Tb3+), Y3O4Br:Eu3+ (or Tb3+), Y3O4Cl:Eu3+ (or Tb3+), Y3PO7:Eu3+ (or Tb3+), Y4GeO8:Eu3+ (or Tb3+), Y8P2O17:Eu3+ (or Tb3+), YAl3(BO3)4:Eu3+ (or Tb3+), YAlO3:Eu3+ (or Tb3+), YAlO3:Eu3+ (or Tb3+), YBO3:Eu3+ (or Tb3+), YbOBr:Yb:Eu3+ (or Tb3+), YF3:Eu3+ (or Tb3+), YOBr:Eu3+ (or Tb3+), YOCl:Eu3+ (or Tb3+), YOCl:Eu3+ (or Tb3+), YOF:Eu3+ (or Tb3+), YOF:Eu3+ (or Tb3+), YP3O9:Eu3+ (or Tb3+), YPO4:Eu3+ (or Tb3+), YPO4:Eu3+ (or Tb3+), YTaO4:Eu3+ (or Tb3+), YVO4:Eu3+ (or Tb3+), ZrP2O7:Eu3+ (or Tb3+), or mixtures thereof.
The skilled person will understand that the notation Eu3+ (or Tb3+) indicates that the host lattice is doped with Eu3+ or with Tb3+.

In an exemplary embodiment, the second luminescent material is selected from the group consisting of (Srₙ,Ca₁₋ₙ)₁₀(PO₄)₆*B₂O₃:Eu²⁺ (wherein 0≦n≦1), (Ba,Sr,Ca)₅(PO₄)₃(Cl,F,Br,OH):Eu²⁺,Mn²⁺, (Ba,Sr,Ca)BPO₅:Eu²⁺,Mn²⁺, Sr₂Si₃O₈*2SrCl₂:Eu²⁺, (Ca,Sr,Ba)₃MgSi₂O₈:Eu²⁺,Mn²⁺, BaAl₈O₁₃:Eu²⁺, 2SrO*0.84P₂O₅*0.16B₂O₃:Eu²⁺, (Ba,Sr,Ca)MgAl₁₀O₁₇:Eu²⁺,Mn²⁺, K₂SiF₆:Mn⁴⁺, (Ba,Sr,Ca)Al₂O₄:Eu²⁺, (Y,Gd,Lu,Sc,La)B0₃:Ce³⁺,Tb³⁺,(Ba,Sr,Ca)₂(Mg,Zn)Si₂O₇:Eu²⁺, (Mg,Ca,Sr,Ba,Zn)₂Si₁₋ₓO₄₋₂ₓ:Eu²⁺ (wherein 0≦x≦0.2), (Sr,Ca,Ba)(Al,Ga)₂S₄:Eu²⁺, (Ca,Sr)₈(Mg,Zn)(SiO₄)₄Cl₂:Eu²⁺,Mn²⁺, Na₂Gd₂B₂O₇:Ce³⁺,Tb³⁺, (Sr,Ca,Ba,Mg,Zn)₂P₂O₇:Eu²⁺,Mn²⁺, (Ca,Sr)S:Eu²⁺,Ce³⁺, (Y,Gd,Tb,La,Sm,Pr,Lu)₃(Sc,Al,Ga)₅₋ₙO_{12-3/2n}:Ce³⁺ (wherein 0≦n≦0.5), ZnS:Cu+, Cl-, (Y,Lu,Th)₃Al₅O₁₂:Ce³⁺, ZnS:Cu+,A13+, ZnS:Ag+,A13+, ZnS:Ag+,Cl-, (Ca, Sr) Ga₂S₄:Eu²⁺, SrY₂S₄:Eu²⁺, CaLa₂S₄:Ce³⁺, (Ba,Sr,Ca)MgP₂O₇:Eu²⁺,Mn²⁺, CaWO₄, (Ba,Sr,Ca)ₙSiₙNₙ:Eu²⁺ (where 2n+4=3n), Ca₃(SiO₄)Cl₂:Eu²⁺, (Y,Lu,Gd)₂₋ₙCaₙSi₄N₆₊ₙC₁₋ₙ:Ce³⁺, (wherein 0≦n≦0.5), (Lu,Ca,Li,Mg,Y) alpha-SiAlON doped with Eu²⁺ and/or Ce³⁺, (Ca,Sr,Ba)SiO₂N₂:Eu²⁺,Ce³⁺, (Sr,Ca)AlSiN₃:Eu²⁺, CaAlSi(ON)₃:Eu²⁺, Sr₁₀(PO₄)₆Cl₂:Eu²⁺, (BaSi)O₁₂N₂:Eu²⁺, SrSi₂(O,Cl)₂N₂:Eu²⁺, (Ba,Sr)Si₂(O,Cl)₂N₂:Eu²⁺ or mixtures thereof.

Preferably, the second luminescent material is a Ce³⁺-doped garnet, such as Y₃Al₅O₁₂:Ce³⁺ ("YAG:Ce") or Lu₃Al₅O₁₂:Ce³⁺ ("LuAG:Ce") or a combination thereof.

Preferably, in the case of Ce³⁺ doping, the second luminescent material has a host lattice doped at a level of 0.05-5%, more preferably 0.1-4%.

Preferably, the first luminescent material and/or second luminescent material are provided in the form of nanoparticles. More preferably, the first luminescent material and second luminescent material are provided in the form of nanoparticles.

Any suitable nanoparticles may be used in the methods according to all aspects of the invention. Suitable nanoparticles include particles of which at least one dimension is at a nanometer scale, preferably ≤ 100 nm. More preferably, the D50 value of the nanoparticles is ≥ 1nm and ≤ 50 nm, most preferably ≥ 2nm and ≤ 10 nm, as measured using transmission electron microscopy (TEM).

### Organic ligand removal

The luminescent material (such as the first luminescent material and/or the second luminescent material) may comprise organic ligands. As is known to the skilled person, organic ligands, in the art are also referred to as capping molecules (or a capping agent) are generally used to control growth and to avoid clustering of particles, in particular of nanoparticles.

The ligands may be any organic ligands suitable for this purpose. Examples of ligands include fatty acids (including salts and esters thereof), amines, polyols, for instance oleic acid, oleyl amine, oleate, tributylamine and (poly) ethylene glycol.

Preferably, the method according to the first aspect of the invention comprises removing organic ligands from said first luminescent material and/or from said second luminescent material. Preferably, the method according to the first aspect of the invention comprises removing organic ligands from said first luminescent material and from said second luminescent material. It is found that removal of organic ligands facilitates bringing the first luminescent material and second luminescent material in close proximity, which is particularly advantageous if it is desired to obtain a composition allowing energy transfer (FRET) from the second luminescent material to the first luminescent material.

The method according to the third aspect of the invention comprises removing at least part of the organic ligands from said luminescent material. This is advantageous, since it enables efficient annealing without or with limited oxidation of organic ligands.

The description below is applicable to the methods according to the first aspect of the invention as well as to according to the third aspect of the invention.

Methods for removing organic ligands from luminescent materials are known in the art and optional removal of organic ligands is not limited to a particular method. For instance, organic ligand removal may be effected by contacting the luminescent material comprising organic ligands (or first luminescent material and/or the second luminescent material) with an acid, for instance HCl. The use of HCl to remove organic ligands is described in Wang et al, Tuning upconversion through Energy Migration in Core-Shell Nanoparticles, Supplementary Information, Nature Materials (2011) 1-35. Another method is described in Nano Lett., 2011, 11 (12), pp 5356-5361.

Preferably, removing organic ligands comprises contacting said first luminescent material and/or said second luminescent material with an oxidizing agent, preferably in the presence of a solution comprising said oxidizing agent.

Any suitable oxidizing agent may be used. Suitable oxidation agents may include any compound or combination of compounds, preferably in a solution, capable of oxidizing at least part of the organic ligands. Preferably, the oxidation agent is selected such that it is capable of oxidizing carbon present in the carbon chain of the organic ligands. Without wishing to be bound by any scientific theory, it is believed that as a result of the oxidation the organic ligands break down enabling the residues to dissolve and be removed in a simple and efficient manner, preferably using one or more washing steps.

Preferably the oxidizing agent has a standard reduction potential > 1 Volt.

The oxidizing agent may for example be selected from the group consisting of an inorganic peroxide (preferably H₂O₂), Fenton's reagent, nitric acid (HNO₃) and nitrate compounds, sulfuric acid (H₂SO₄), peroxydisulfuric acid (H₂S₂O₈), peroxymonosulfuric acid (H₂SO₅), chlorite, chlorate, perchlorate, and other analogous halogen compounds,
Fluorine (F₂), chlorine (Cl₂), and other halogens, hypochlorite and other hypohalite compounds, hexavalent chromium compounds such as chromic and dichromic acids and chromium trioxide, pyridinium chlorochromate (PCC), and chromate/dichromate compounds, permanganate compounds such as potassium permanganate, sodium perborate, nitrous oxide (N₂O), nitrogen dioxide/dinitrogen tetroxide (NO₂ / N₂O₄) and potassium nitrate (KNO₃).

Preferably, the oxidizing agent comprises H₂O₂. Preferably, the oxidizing agent comprises H₂O₂ in combination with NH₄OH or H₂SO₄, more preferably H₂O₂ in combination with NH₄OH. Preferably, the oxidation agent is present in a solution, preferably an aqueous solution.

Any suitable solution in which the luminescent material comprising the organic ligands (or first luminescent material and/or second luminescent material) may be dispersed may be used. Preferably, the solution comprises water or an alcohol (preferably methanol or ethanol) or a mixture thereof.

Preferably, the solution comprises NH₄OH, more preferably the solution comprises NH₄OH and H₂O₂. Preferably, the solution comprises NH₄OH and H₂O₂ in a weight ratio between 8 : 1 and 2:1, most preferably in a weight ratio of about 3:1.

Preferably, the solution comprising NH₄OH and H₂O₂ is at a temperature of between 60 and 90 °C, preferably about 70 °C.

In a preferred embodiment, the luminescent material comprising the organic ligands (or first luminescent material and/or second luminescent material), preferably in the form of nanoparticles, is dispersed in a first solution, for instance in water or an alcohol (e.g. methanol or ethanol) or a mixture thereof. The first solution may then be combined with the oxidizing agent and/or with a solution comprising the oxidizing agent. For instance, the oxidizing agent and/or a solution containing the oxidizing agent may be added to the first solution containing the luminescent material.

Contacting the luminescent material (or first luminescent material and/or second luminescent material) comprising the organic ligands with the oxidizing agent may be performed at any suitable temperature and during any suitable period. The skilled person is able to determine optimal conditions. In a preferred embodiment, in particular if the oxidizing agent is H₂O₂ which is present in a NH₄OH solution, contacting the luminescent material comprising the organic ligands with the oxidizing agent may for instance be effected for 15-120 minutes.

### Dispersing the first luminescent material and the second luminescent material in a liquid;

The method according to the first aspect of the invention comprises dispersing the first luminescent material and the second luminescent material in a liquid. Any suitable liquid may be used. The skilled person is able to select a preferred liquid considering the nature of the luminescent material (e.g. nanoparticles). In the event of a hydrophobic luminescent material (e.g. nanoparticles), a non-polar liquid is preferably used. In the event of a hydrophilic luminescent material (e.g. nanoparticles) a polar solvent is preferably used. Suitably the liquid comprises water or an alcohol (e.g. methanol or ethanol) or a mixture thereof.

In an embodiment, the liquid may be the solution comprising the oxidizing agent or a washing liquid which may be used to wash first luminescent material and the second luminescent material after an organic ligand removal step.

### Removing said liquid, resulting in a dried product, wherein said removing comprises evaporation

The method according to the first aspect of the invention comprises removing the liquid, wherein the removing comprises evaporation. Removing the liquid by evaporation results in a dried product. Removing liquid by evaporation may be effected in any suitable manner, e.g. in an oven or under vacuum.

In the event the first luminescent material and second luminescent material are in the form of nanoparticles, the dried product is found to comprise clusters of nanoparticles.

In the dried product, the first luminescent material and second luminescent material are found to be in close proximity. In the embodiment wherein the first luminescent material and the second luminescent material are selected such that the second luminescent material has an emission spectrum which overlaps at least partly with one or more of excitation bands of the first luminescent material, such close proximity enables non-radiative energy transfer between them.

### Annealing

The methods according to all aspects of the invention comprises annealing. Annealing can be effected in any suitable manner. Preferably, annealing is effected at a temperature of at least 200 °C, such as between 200 and 1500 °C, preferably between 300 and 1200 °C. Preferably, annealing is effected for a period of at least 5 minutes, more preferably from 15 minutes to 12 hours.

### Second aspect of the invention

The method according to the second aspect of the invention comprises:
- providing a composition comprising a first luminescent material and a second luminescent material, wherein said first luminescent material and said second luminescent material are selected such that said second luminescent material has an emission spectrum which overlaps at least partly with one or more excitation bands of said first luminescent material; and wherein said first luminescent material and said second luminescent material are so arranged to each other to allow non-radiative energy transfer from said second luminescent material to said first luminescent material; and
- annealing said composition.

Surprisingly it is found that annealing of the composition enables to obtain a composition capable of providing increased non-radiative energy transfer.

The skilled person will understand that non-radiative energy transfer (sometimes also referred to as Fluorescent Resonance Energy Tranfer, FRET) from the second luminescent material (or sensitizer material) to the first luminescent material (or light emitting material) involves the non-radiative transfer of energy from an excited sensitizer ion in the second luminescent material to an acceptor (or emitter) ion in the first luminescent material. It is evidenced and detectable by increased selective excitation of the sensitizer ion in the second luminescent material, resulting in increased emission from an emitter ion in the first luminescent material.

Detectable non-radiative energy transfer may be achieved in any suitable manner.

The skilled person will realize that - since resonant energy transfer is in first order inversely proportional to inter-ion distance at the power of 6 - the arrangement to allow non-radiative energy transfer may be effected by proper engineering of the effective distances between the sensitizer ions in the sensitizer material and the emitter ions in the emitting material. It may for instance be achieved by the methods disclosed herein and/or by the topologies disclosed herein.

The composition comprising the first luminescent material and second luminescent material to be used in the method according to the second aspect of the invention may for instance obtained or obtainable by applying the method according to steps (i), (ii), (iii) and (iv) of the first aspect invention. As discussed, this method enables to obtain the first luminescent material and second luminescent material in close enough proximity to allow non-radiative energy transfer between them.

The first luminescent material and the second luminescent material used in the second aspect of the invention preferably have the characteristics as described in the discussion of the first aspect of the invention.

The luminescent composition may comprise further luminescent materials. For instance, the luminescent composition may comprise at least two emitting materials and/or at least two sensitizer materials. In a preferred embodiment, the luminescent material comprises a first emitting material having a host lattice doped with Eu³⁺ ions; and a second emitting material having a host lattice doped with Tb³⁺ ions. The luminescent composition may comprise a first sensitizer material and a second sensitizer material. The first sensitizer material and second sensitizer material may be so arranged to each other to allow non-radiative energy transfer from the first sensitizer material to the first emitting material and/or from the second sensitizer material to the second emitting material.

The composition used in the method according to the second aspect of the invention may be obtained in many different ways and may have a wide variety of forms.

According to a preferred embodiment of the present invention, the first luminescent material and/or second luminescent material is provided as a nanophosphor. According to the present invention, the term "nanophosphor" in the context of the present invention especially means and/or includes a topology in which at least one dimension thereof is in a nanometer scale, preferably ≤100nm or less. It should be noted that the first material together with the second material may comprise much larger structures.

Methods of producing such nanophosphors are inter alia described in Development of nanophosphors-A review, H. Chander, Materials Science and Engineering, 49, 113-155 (2005).

The composition may be in the form of nanoparticles as discussed hereinabove.

According to a preferred embodiment of the second aspect of the invention the nanoparticles have a core-shell structure with undoped material forming the core and the first luminescent material forming a shell around the core. Advantages include to be able to lower the amount of the Eu³⁺ used and to increase overall energy transfer efficiency. If this embodiment is used, it is especially preferred that the thickness of the shell essentially made out of the first luminescent material is ≥0.5 nm and ≤5 nm.

According to another preferred embodiment of the second aspect of the invention, the first luminescent material is provided, preferably essentially provided as a nanolayer, i.e. a layer in which the thickness of the layer is in a nanometer scale, preferably ≤100nm or less, preferably ≥ 0.5nm and ≤10 nm, whereas the width and breadth may be larger.

According to another preferred embodiment of the second aspect of the invention the second luminescent material is provided, preferably essentially provided as a nanophosphor (or nanoparticles), whereby *mutatis mutandis* and independently from the first material the above description can be applied here, too.

According to a further preferred embodiment of the second aspect of the invention, the second luminescent material is provided, preferably essentially provided as a bulk material with the first material provided on the second luminescent material. In this context the term "bulk" especially means and/or includes greater than nano-scale, for example > 100 nm diameter and including micro-size scales.

According to a further embodiment of the second aspect of the invention the first luminescent material and/or second luminescent material is provided, preferably essentially provided as a ceramic. The term "ceramic" according to the present invention refers to and/or encompasses in particular a compact crystalline or polycrystalline material which includes a controlled amount of pores or is non-porous. The term "polycrystalline material" according to the present invention refers to and/or encompasses in particular a material having a bulk density of greater than 90 percent of the main component, consisting of more than 80 percent of individual crystal domains, wherein each crystal domain has a diameter of 0.1 - 10 µm and a different crystallographic orientation. The individual crystal domains may be bonded to each other or diluted via an amorphous or glassy material or by additional crystalline phases. According to a preferred embodiment of the present invention the crystalline material has a density of ≥ 90% to ≤ 100% of the theoretical density. This has been found to be advantageous for many applications of the present invention.

According to a preferred embodiment of the second aspect of the invention, the first luminescent material and second luminescent material are provided, preferably essentially provided as several shells in a nanophosphor and/or nanoparticle material. In this regard several topologies are preferred within the present invention:

### Core- shell- topologies

According to one embodiment, the first luminescent material forms the core whereas the second luminescent material is provided as a shell, according to an alternative the first luminescent material forms the shell whereas the second luminescent material forms the core. For both embodiments it is advantageous that both the core as well as the shell independently have a thickness of ≥ 1nm and ≤20 nm.

### Several shells

The above topology can be expanded to have a structure with several shells. Here the following structures have proven themselves to be especially of interest:
- First luminescent material as the core, second luminescent material around the core and a second layer of first luminescent material around the second luminescent material
- Second luminescent material as the core, first luminescent material around the core and a second layer of second luminescent material around the first luminescent material
- Undoped material as the core, second luminescent material around the core and a second layer of first luminescent material around the sensitizer material (or vice-a-versa)
- Four layer structures e.g. with an undoped core, then subsequently layers of first luminescent material, second luminescent material and first material around the core or with an undoped core, then subsequently layers of second luminescent material, first luminescent material and second luminescent material around the core
For all these topologies it is preferred that independently from each other the thickness of each shell and/or the core is ≥ 0.5nm and ≤20 nm.

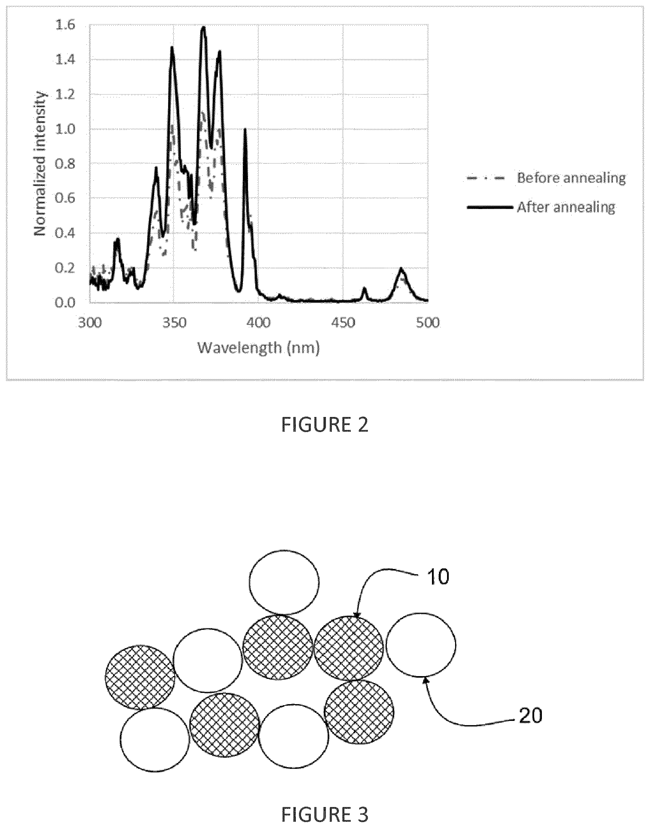

Figure 3 shows - very schematically - a first embodiment of the composition which may be used in the second aspect the present invention, in with both the first luminescent material 10 and the second luminescent material 20 are provided in the form of nanoparticles. As can be seen from Figure 3 the surface-to-surface distance between the particles is small enough to allow for direct non-radiative energy transfer from the second luminescent material 20 to the first luminescent material 10. However, the undesired charge-transfer quenching usually does not or only seldom occur because here the distance between the second luminescent material and the Eu³⁺ of the first luminescent material is usually too large.

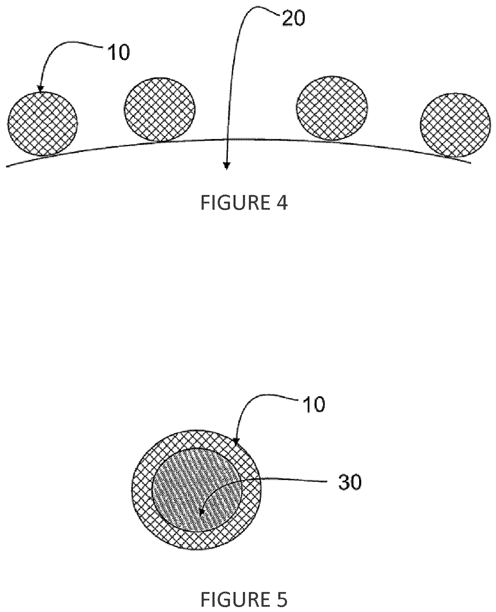

Figure 4 shows -very schematically - a second embodiment of the composition which may be used in the second aspect the present invention. In this embodiment, the second luminescent material 20 is provided as a bulk material with the first luminescent material 10 provided as nanoparticles surrounding the second luminescent material. This approach has been shown to be especially promising if the emission of the sensitizer is also desired in the spectrum of the device, e.g., if the sensitizer material comprises YAG:Ce or the like.

Figures 5 to 8 show very schematical cross-sectional views through nanoparticles according to the third to sixth embodiment of the present invention.

In Figure 5 the nanoparticle has a core formed out of an undoped material 30 with the first luminescent material 10 forming a shell around it. It goes without saying that also an alternative embodiment where the second luminescent material forms the shell is an embodiment of the present invention.

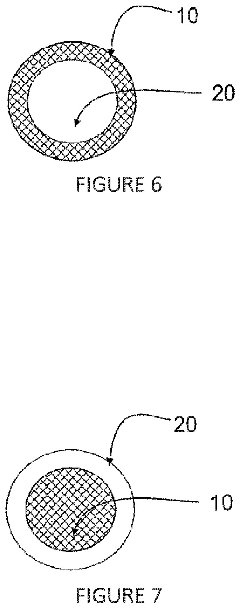

In Figure 6 the second luminescent material 20 forms the core with the first luminescent material 10 provided as a shell around the core, in Fig. 7 it is the other way around i.e. the first luminescent material 10 forms the core, the second luminescent material 20 the shell.

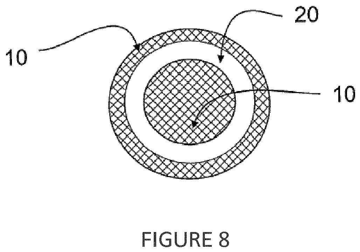

The embodiment of Figure 8 shows a more complex structure with the first luminescent material 10 forming another shell around the particle of the embodiment of Fig. 7. It goes without saying that also here the roles may be reversed (i.e. the second luminescent material forming the core and the outer shell with the first luminescent material in between) or also topologies where undoped material is forming a shell or the core also are a part of the present invention.

It is possible to bring the first luminescent material (light emitting material) proximal to a large (e.g., several 10s, 100s, or 1000s nm) second luminescent material (sensitizer material). In this case, it may be beneficial to dope the donor sufficiently so that efficient non-radiative energy migration occurs between ions excited deep within the donor particle and those near the surface and which are thus likely to participate in FRET and give their energy to the neighboring Tb³⁺ and/or Eu³⁺ doped nanoparticles. In the case of YAG:Ce, wherein high (> 3%) Ce³⁺ concentrations can lead to reduced quantum efficiencies due to the large Ce atom in comparison to the target lattice site, co-doping with Tb³⁺ (up to several 10's of percent) can be used to enhance energy migration. Energy migration might be beneficial for smaller particles as well, as well as helpful for the emitter particles.

Annealing of the composition can be effected in any suitable manner. Preferably, annealing is effected at a temperature of at least 200 °C, such as between 200 and 1500 °C, preferably between 300 and 1200 °C. Preferably, annealing is effected for a period of at least 5 minutes, more preferably from 15 minutes to 12 hours.

### Third aspect of the invention

According to the third aspect of the invention, there is provided a method for treating a luminescent material comprising organic ligands, said method comprising:
(a) removing at least part of said organic ligands from said luminescent material; and
(b) after (a), annealing said luminescent material.

Removing at least part of the organic ligands and annealing may be carried out as described hereinabove.

### Luminescent material, light-emitting device and lighting system

The invention further relates to a luminescent material obtainable by any of the methods according to the first, second or third aspect according to the invention.

The invention further relates to a light-emitting device comprising the luminescent material obtainable by any of the methods according to the first, second or third aspect according to the invention.. Preferably the light-emitting device further comprises an excitation source for the luminescent material, such as for the second luminescent material.

The invention further relates to a lighting system comprising a light emitting device according to the invention. Preferably, the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The luminescent material according to the invention can be used in a variety of specific topological structures or applications, including - but not limited thereto - the following:

### 1. "Direct deposited phosphor powder":

The luminescent material is synthesized in powder form (either nano- and/or micro-sized, as described above and depending on the size distribution of the larger material particles) and applied directly to the LED chip or package by any number of means, including but not limited to, dispensing within a binder (e.g., silicone), screen-printing, electrophoresis, or incorporated into solid-form binders and laminated onto the LED chips or LED wafer.

### 2 "Direct deposited phosphor ceramic":

The phosphor ceramic is applied directly as a thin plate onto an LED dice.

### 3. "Remote phosphor" systems:

"Remote phosphor" systems in particular mean devices in which a phosphor (luminophore, engl.: phosphor) is arranged remote from a light emitting light source emitting in a narrow wavelength range, usually embedded in or linked to a polymer, glass or ceramic matrix. Thus, a remote phosphor system is fundamentally different from a system in which the phosphor is applied directly onto or at the light source such as in LED light sources in which the phosphor is applied directly onto the light emitting dice. Usually, a distinction is made between two basic structures, from which many variants can be derived:
a) "Remote phosphor in transmission mode": The phosphor matrix is placed onto a reflection chamber in which the LED is disposed. The light can escape only through the phosphor matrix (transmission).
b) "Remote phosphor in reflection mode": The phosphor matrix is applied onto a reflective carrier or is coated with a reflective material on the back side, the LED light source is disposed in or slightly sideward from the emission direction and irradiates onto the phosphor matrix. The converted light is re-emitted in the direction of the light source or in the radiation direction, the light which has passed through the phosphor matrix is re-directed through the phosphor matrix in the emission direction by means of the back side reflective layer. Thus, the light can only escape in the reflection direction.

The present invention also relates to a light emitting device comprising a converter system according to the present invention and a UV-A, violet or blue light emitting material.

This UV-A, violet or blue emitting material serves as a primary light source and preferably is a blue emitting LED Chip.

Preferably this UV-A, violet or blue light emitting materials emits light towards the luminescent material with a wavelength of 315-400 nm (UV-A), 400-440 nm (violet) or 440-480 nm (blue), more preferably between 430-465 nm.

Preferred characteristics of the first aspect and second aspect of the invention apply to the third aspect mutatis mutandis.

The invention will now further be illustrated using the following examples, without however being limited thereto.

### EXAMPLES

### Example 1: Exemplary Procedure

The following exemplary procedure is provided:
- Nanomaterials are mixed together in the desired weight ratios. This could be either in dried (powder) form, or dissolved/dispersed in a liquid.
- A solvent is added; typically 5-20 mL of either water, methanol or ethanol is added to 100-200 mg of nanomaterials.
- Mixture is shaken and stirred for a few minutes
- Mixture is sonicated for 1.5 hrs
- Base piranha solution is prepared in the meantime: concentrated NH₄OH solution (30% in water) is heated to 60C, the H₂O₂ (30% in water) is added in a ∼3:1 ratio and reheated to 60C.
- About 15mL of the base piranha solution is added to the nanopowder dispersion/solution and heated to 60-80 C and stirred for 90 min.
- After 30 min. solution/dispersion was cooled to room temperature and centrifuged at 3000 rpm for 10 min
- Piranha solution was removed after centrifuging, and 5 mL of acidic ethanol was added to wash (pH 4, prepared by adding 0.1M HCl to ethanol). Mixture was shaken and sonicated for a few minutes to disperse the materials again.
- Centrifuged again (3000 rpm, 10 min), removed supernatant and re-mixed in acidic ethanol.
- In total particles were washed 5 times with acidic ethanol before adding few mL water
- Particles were dried in the oven at 120-180C.
- Sample was grinded into a powder

### Example 2 (with annealing) and Example 3 (without annealing)

LaPO₄:Eu³⁺ (5%) + LaPO₄:Tb³⁺ (40%) nanoparticles with tributylamine ligands were synthesized using the following (known in literature) procedure:
A typical recipe for the preparation of La₁₋ₓLnₓPO₄ nanoparticles in a high boiling coordinating solvent is as follows:
- Dissolve a total of 10 mmol LaCl₃.6H₂O and EuCl₃.6H₂O or TbCl₃.6H₂O, with a ratio depending on the desired doping level, in approximately 10 mL of methanol p.a. in a 100 mL 3-neck round-bottomed flask and acquire a clear solution
- Add 10.9 mL, 10.650 g (40 mmol) tributyl phosphate
- Remove methanol from solution under vacuum (Schlenk-line), careful with vacuum
- Add 30 mL (32 g) diphenyl ether
- Open system, flush afterwards
- Remove the water released by the hydrated metal chlorides under vacuum at 105°C (Schlenk line) - water should evaporate around 80-85°C
- Cool down reaction mixture to below 50°C and add 9.5 mL, 7.41 g (40 mmol) tributylamine to the clear solution (under nitrogen)
- Add 7.0 mL of a 2 M solution phosphoric acid in dihexyl ether (dissolve 1.96 g H₃PO₄ in 10 mL dihexyl ether under ultrasonification), large vial
- Heat the mixture to 200°C for 16 hours and cool reaction mixture to room temperature
- Separate nanocrystals by centrifuging at 2000 rpm for 5 minutes
- Wash nanocrystals several times with toluene, careful with adding methanol
- Dry powder under vacuum
- The powder should be redispersible in methanol
- Perform S-ray Diffraction (XRD) measurements to determine whether the La₁₋ₓPO4:Lnₓ is obtained

The procedure described in example 1 was followed. The nanoparticles were mixed in a 1:1 weight ratio.

In example 2 the sample (grinded powder) was annealed at 600 °C for 2 hrs before measuring the spectra.

In example 3 the sample (grinded powder) this annealing step was not applied.

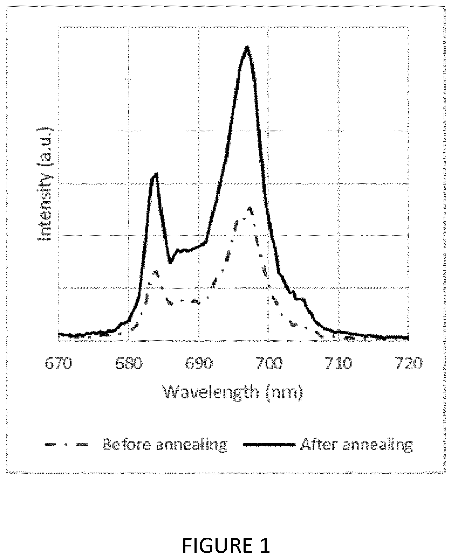

Both samples are excited in the Tb³⁺ at 484.5 nm, with the same intensity and measured at room temperature. The sample "After annealing" (example 2) clearly shows a factor more than 2 stronger Eu³⁺ emission compared to the sample "Before annealing" (example 3), see Figure 1. Surprisingly, the sample does not only show a higher overall emission intensity, but also a high IFRET efficiency as can be seen from Figure 2. In Figure 2 the excitation spectrum of Eu³⁺ is measured at 697 nm, where the Tb excitation lines are clearly relatively more intense after annealing compared to before. This indicates a higher IFRET efficiency.

## Claims

1. Method for preparing a luminescent composition, said method comprising:
(i) providing a first luminescent material and a second luminescent material;
(ii) dispersing said first luminescent material and said second luminescent material in a liquid;
(iii) optionally, removing organic ligands from said first luminescent material and/or from said second luminescent material;
(iv) removing said liquid, resulting in a dried product, wherein said removing comprises evaporation; and
(v) annealing said dried product.

2. Method according to claim 1, wherein said first luminescent material and said second luminescent material are selected such that said second luminescent material has an emission spectrum which overlaps at least partly with one or more of excitation bands of the first luminescent material.

3. Method according to claim 1 or 2, wherein said first luminescent material and/or said second luminescent material are in the form of nanoparticles, preferably wherein said first luminescent material and said second luminescent material are in the form of nanoparticles, preferably wherein the D₅₀ value of the nanoparticles is ≥1nm and ≤ 100 nm.

4. Method, for instance according to any preceding claim, for preparing a luminescent composition, said method comprising:
- providing a composition comprising a first luminescent material and a second luminescent material, wherein said first luminescent material and said second luminescent material are selected such that said second luminescent material has an emission spectrum which overlaps at least partly with one or more of excitation bands of said first luminescent material; and wherein said first luminescent material and said second luminescent material are so arranged to each other to allow non-radiative energy transfer from said second luminescent material to said first luminescent material; and
- annealing said composition.

5. Method according to any preceding claim, wherein said first luminescent material is a red emitting material.

6. Method according to any preceding claim, wherein said first luminescent material is doped with one or more ions selected from the group consisting of Eu³⁺, Tb³⁺, Mn⁴⁺.

7. Method according to any preceding claim, wherein said second luminescent material is excitable in the wavelength range between 380 to 580 nm, preferably wherein said second luminescent material is excitable in the UV-A (315 to 400 nm), violet (400 to 440 nm), blue (440 to 480 nm) or green (510 to 560 nm) wavelength range, preferably in the blue (440 to 480 nm) wavelength range.

8. Method according to any preceding claim, wherein said second luminescent material is doped with one or more ions selected from of the group consisting of Eu²⁺, Pb²⁺, Bi³⁺ and Ce³⁺.

9. Method according to any preceding claim, wherein said second luminescent material is Y₃Al₅O₁₂:Ce³⁺ ("YAG:Ce") or Lu₃Al₅O₁₂:Ce³⁺ ("LuAG:Ce") or a combination thereof.

10. Method according to any preceding claim, wherein said annealing is effected at a temperature of between 200 and 1500 °C.

11. Method according to any preceding claim, wherein said liquid comprises water or an alcohol (e.g. selected from the group consisting of methanol, ethanol, isopropanol or mixtures thereof) or a mixture thereof.

12. Method according to any preceding claim, wherein (iii) is not optional, preferably wherein the method comprises removing organic ligands from said first luminescent material and from said second luminescent material.

13. Method according to claim 12, wherein said removing organic ligands comprises contacting said first luminescent material and/or said second luminescent material with an oxidizing agent, preferably in the presence of a solution comprising said oxidizing agent.

14. Method for treating a luminescent material comprising organic ligands, said method comprising:
(a) removing at least part of said organic ligands from the luminescent material; and
(b) after (a), annealing said luminescent material

15. Method according to claim 14, wherein said luminescent material is in the form of nanoparticles, preferably wherein the D₅₀ value of the nanoparticles is ≥1nm and ≤ 100 nm.

16. Luminescent composition or luminescent material obtainable by the method according to any preceding claim.

17. Light-emitting device, said light emitting device comprising the luminescent material according to claim 16, preferably wherein light-emitting device further comprises an excitation source for the luminescent material, such as for the second luminescent material.

18. A lighting system comprising a light emitting device according to claim 17, preferably, wherein the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications and green house lighting systems.
